# EUROPÄISCHE PATENTSCHRIFT

(11) **EP 1 543 259 B1**
(45) Veröffentlichungstag und Bekanntmachung des Hinweises auf die Patenterteilung: **05.11.2008**
(21) Anmeldenummer: 03753446.8
(22) Anmeldetag: 23.09.2003
(51) Int. Cl.: F16H 61/04

(54) **ERHÖHUNG DER SPONTANITÄT EINES AUTOMATGETRIEBES**
METHOD FOR INCREASING THE SPONTANEITY OF AN AUTOMATIC TRANSMISSION
ACCROISSEMENT DE LA SPONTANEITE D'UNE BOITE DE VITESSES AUTOMATIQUE

(30) Priorität: 27.09.2002 DE 10245359
(43) Veröffentlichungstag der Anmeldung: 22.06.2005
(73) Patentinhaber: ZF Friedrichshafen AG, 88038 Friedrichshafen (DE)
(72) Erfinder: POPP, Christian, 88079 Kressbronn (DE); STEINHAUSER, Klaus, 88079 Kressbronn (DE)
(86) Internationale Anmeldenummer: PCT/EP2003/010551
(87) Internationale Veröffentlichungsnummer: WO 2004/031619

(56) Entgegenhaltungen:
- EP-A- 0 341 631
- EP-A- 0 800 022
- EP-A- 1 188 961
- EP-A- 1 298 361
- WO-A-98/45627
- DE-C- 19 722 954
- US-A- 6 102 830
- US-A1- 2002 046 617
- US-B1- 6 385 520

## Beschreibung

Die Erfindung betrifft ein Verfahren zur Durchführung von Schaltungen eines Kraftfahrzeug-Automatgetriebes, durch das die Spontanität des Automatgetriebes erhöht und die Schalthäufigkeit reduziert wird, gemäß dem Oberbegriff der Patentansprüche 1, 4 und 7. Aus der WO 98/45 627 ist ein Verfahren mit den Merkmalen des Oberbegriffes der Ansprüche 1, 4 und 7 bekannt.

Üblicherweise werden Schaltungen eines Kraftfahrzeug-Automatgetriebes ausgelöst, wenn ein von einem Fahrer des Kraftfahrzeugs vorgebbarer Leistungswunsch - beispielsweise eine Fahrpedal- oder Drosselklappenstellung - eine Hochschalt- bzw. Rückschaltkennlinie eines Schaltkennfeldes des Automatgetriebes überschreitet. Neben diesen mittels Fahrpedal ausgelösten Schaltungen hat ein Fahrer auch die Möglichkeit, zu jedem beliebigen Zeitpunkt manuelle Schaltungen auszulösen. So zeigt beispielsweise die DE 43 11.886 C2 eine Vorrichtung, durch die ein Fahrer mittels eines Wählhebels mit einer manuellen Gasse bzw. Schaltwippen am Lenkrad Schaltungen auslösen kann.

Dabei können die Schaltungen des Automatgetriebes beispielsweise als Überschneidungsschaltungen, bei denen ein erstes Schaltelement öffnet und ein zweites Schaltelement schließt, ausgeführt sein. Der Druckverlauf der an der jeweiligen Schaltung beteiligten Schaltelemente wird üblicherweise von einer elektronischen Getriebesteuerung, die über elektromagnetische Stellglieder auf eine hydraulische Ansteuerung der Schaltelemente wirkt, gesteuert oder geregelt. Ein derartiges Steuerungsverfahren ist beispielsweise aus der DE 42 40 621 A1 bekannt.

In der Praxis kann nunmehr folgendes Problem auftreten: Zu Beginn eines beabsichtigten Überholvorganges fordert der Fahrer über das Fahrpedal eine Rückschaltung an, die dann von der Getriebesteuerung einleitet wird. Während der gerade begonnenen Überholvorganges erkennt der Fahrer nun, daß er den Gegenverkehr passieren lassen muß. Als Reaktion hierauf wird er den Überholvorgang abbrechen, indem er das Fahrpedal freigibt. Aufgrund dieser Fahrpedalrücknahme wird die Getriebesteuerung dann in der Regel eine Hochschaltung ausführen. Erkennt nun der Fahrer im weiteren zeitlichen Verlauf noch während der Durchführung der Hochschaltung, daß die Gegenfahrbahn frei ist, so wird er den Überholvorgang erneut einleiten, indem er entweder das Fahrpedal erneut betätigt oder über den Wählhebel eine Rückschaltung manuell einleitet. Gemäß dem Stand der Technik wird das Automatgetriebe jedoch zuerst die Rückschaltung und daran anschließend die Hochschaltung vollständig ausführen, und erst dann wird wieder eine Rückschaltung gestartet.

Als Verbesserung ist aus der EP 0 341 631 B1 ein Verfahren zur Steuerung einer Überschneidungsschaltung bekannt, bei dem eine eingeleitete erste Schaltung nicht vollständig ausgeführt wird, wenn nach Ablauf einer Sperrzeit nach dem Schaltbefehl für die erste Schaltung ein Schaltbefehl für eine zweite Schaltung innerhalb einer Zeit erfolgt, in der die abschaltende Kupplung noch drehmomentführend ist und die zuschaltende Kupplung noch kein Drehmoment überträgt. Im Falle eines zweiten Schaltbefehls nach diesem Zeitpunkt, also zum Ende der ersten und während der zweiten Phase der Überschneidungsschaltung, wird zuerst die begonnene erste Schaltung vollständig ausgeführt, eine weitere Sperrzeit abgewartet und anschließend die Folgeschaltung durchgeführt.

Zur weiteren Erhöhung der Spontanität eines elektrohydraulisch gesteuerten Automatgetriebes ist aus der DE 197 22 954 C1 ein Verfahren zur Steuerung von in drei Phasen ablaufenden Überschneidungsschaltungen bekannt, bei dem eine Hochschaltung von einer ersten in eine zweite Übersetzungsstufe einerseits nach dem Schaltbefehl unverzüglich ausgeführt wird und andererseits verzögerungsfrei abgebrochen und in die erste Übersetzungsstufe zurückgekehrt wird, wenn vor Beginn der dritten Phase der laufenden Überschneidungs-Hochschaltung eine vom Fahrer vorgebbare Anforderung zu einer Rückschaltung erkannt wird. Dabei ist diese erste Phase der Überschneidungsschaltung definiert als Füll- und Einregelphase, während der das zuschaltende Schaltelement mit Druckmedium befüllt wird und durch eine Druckabsenkung des abschaltenden Schaltelementes eine Drehzahlüberhöhung einer Getriebeeingangsdrehzahl eingeregelt wird. Die zweite Phase entspricht der Lastübernahme durch das zuschaltende Schaltelement und beginnt mit der Verkleinerung der Drehzahlüberhöhung. In der dritten Phase, die mit dem Wiedererreichen des Synchronpunktes der ersten (alten) Übersetzungsstufe beginnt, wird das zuschaltende Schaltelement vollständig geschlossen und die Getriebeeingangsdrehzahl auf das Niveau der Synchrondrehzahl der zweiten (neuen) Übersetzungsstufe gebracht.

Aus der EP 0 800 022 B1 ist ein Verfahren zur Steuerung eines Schaltvorgangs bekannt, bei dem ein Abbruch einer mit einem ersten Schaltbefehl ausgelösten Hochschaltung von einer ersten in eine zweite Übersetzungsstufe auch dann zugelassen und in die ursprüngliche erste Übersetzungsstufe zurückgekehrt wird, wenn während der Schließphase der Hochschaltung, in der eine Getriebeeingangsdrehzahl von der Synchrondrehzahl der ersten Übersetzungsstufe durch den Schaltdruck des schließenden Schaltelementes auf die Synchrondrehzahl der zweiten Übersetzungsstufe gebracht wird, ein zweiter Schaltbefehl für eine Rückschaltung erkannt wird. Für den.Fachmann ist klar, daß dieses Verfahren nur in Verbindung mit einem selbsttätig schaltenden Freilauf zur automatischen Drehmomentübernahme bei der Rückkehr in die ursprüngliche erste Übersetzungsstufe sinnvoll anwendbar ist. Angewandt auf eine Überschneidungsschaltung, ergeben sich insbesondere bei einem Hochschaltungsabbruch zu einem späten Zeitpunkt der Hochschaltungs-Schließphase erhebliche Komfortprobleme (Schaltstöße) durch die Kupplungsüberschneidung.

Das Problem besteht somit darin, daß einerseits zwischen dem Fahrerwunsch bezüglich der Beschleunigung des Kraftfahrzeugs und der Reaktion des Automatgetriebes insbesondere in Verbindung mit Überschneidungsschaltungen hierauf ein großer zeitlicher Versatz bestehen kann, insbesondere bei einer angeforderten Schaltungsfolge Rückschaltung-Hochschaltung-Rückschaltung. Andererseits kann das Schaltverhalten des Automatgetriebes aufgrund der ständigen Schaltungen vom Fahrer als hektisch empfunden werden.

Der Erfindung liegt die Aufgabe zugrunde, einerseits die Spontanität eines Kraftfahrzeug-Automatgetriebes weiter zu verbessern, ohne Einbußen an der Schaltqualtität insbesondere bei Überschneidungsschaltungen, und andererseits die für den Fahrer spürbare Schalthäufigkeit des Automatgetriebes zu reduzieren.

Die Aufgabe wird erfindungsgemäß durch ein Verfahren mit den Merkmalen der unabhängigen Ansprüche 1, 4 und 7 gelöst. Vorteilhafte Ausgestaltungen der Erfindung ergeben sich aus den Unteransprüchen.

In einer ersten erfindungsgemäßen Lösung der Aufgabe wird eine Rückschaltung eines Kraftfahrzeug-Automatgetriebes von einer ersten in eine zweite Übersetzungsstufe verzögerungsfrei abgebrochen und in die erste Übersetzungsstufe zurückgekehrt, wenn ein Abbruchkriterium erkannt wird, wobei das Abbruchkriterium dann gesetzt wird, wenn eine von einem Fahrer des Kraftfahrzeugs vorgebbare Anforderung zu einer Hochschaltung erkannt wird, bevor sich eine aktuelle Getriebeeingangsdrehzahl bzw. eine dazu äquivalente Drehzahl um einen vordefinierten drehzahlbezogenen Grenzwert von einer Synchrondrehzahl der ersten Übersetzungsstufe entfernt hat. Auch hier ist die Rückschaltung vorzugsweise als Überschneidungsschaltung ausgeführt, kann aber auch als Freilaufrückschaltung ausgeführt sein.

Über den applizierbaren drehzahlbezogenen Grenzwert wird sichergestellt, daß der Fahrer die vom Schaltungsablauf her bereits begonnene Rückschaltung zum Zeitpunkt des Schaltungsabbruchs als eigentliche Schaltung noch nicht spürt. Die Vorteile der ersten erfindungsgemäßen Lösung entsprechen im Wesentlichen denen der ersten erfindungsgemäßen Lösung, jedoch ist der Schaltungsabbruch gemäß der zweiten Lösung im Schaltungsablauf noch ein wenig später möglich als bei der ersten Lösung. Ein Abbruch der Rückschaltung wird dann nicht mehr zugelassen, wenn eine für einen Fahrer spürbare Reaktion -beispielsweise eine Veränderung der Fahrzeugbeschleunigung - auftritt.

In einer zweiten erfindungsgemäßen Lösung der Aufgabe wird eine ebenfalls vorzugsweise als Überschneidungsschaltung ausgeführte Rückschaltung eines Kraftfahrzeug-Automatgetriebes von einer ersten in eine zweite Übersetzungsstufe verzögerungsfrei abgebrochen und in die erste Übersetzungsstufe zurückgekehrt, wenn ein Abbruchkriterium erkannt wird, wobei dieses Abbruchkriterium dann gesetzt wird, wenn eine von einem Fahrer des Kraftfahrzeugs vorgebbare Anforderung zu einer Hochschaltung erkannt wird, bevor eine Zeitstufe, die gestartet wird, wenn eine aktuelle Getriebeeingangsdrehzahl bzw. eine dazu äquivalente Drehzahl eine Synchrondrehzahl der ersten Übersetzungsstufe verläßt, einen vordefinierten zeitbezogenen Grenzwert überschritten hat. Anstelle als Überschneidungsschaltung kann die Rückschaltung auch als Freilaufrückschaltung ausgeführt sein.

In einer dritten erfindungsgemäßen Lösung der Aufgabe schließlich wird eine wiederum vorzugsweise als Überschneidungsschaltung ausgeführte Rückschaltung eines Kraftfahrzeug-Automatgetriebes von einer ersten in eine zweite Über- .. setzungsstufe verzögerungsfrei abgebrochen und in die erste Übersetzungsstufe zurückgekehrt, wenn ein Abbruchkriterium erkannt wird, wobei das Abbruchkriterium dann gesetzt wird, wenn eine von einem Fahrer des Kraftfahrzeugs vorgebbare Anforderung zu einer Hochschaltung erkannt wird, bevor ein Druck eines bei der Rückschaltung abschaltenden Schaltelementes einen vordefinierten druckbezogenen Grenzwert unterschritten hat. Auch bei diese erfindungsgemäßen Lösung kann die Rückschaltung anstelle als Überschneidungsschaltung auch als Freilaufrückschaltung ausgeführt sein.

Über den applizierbaren zeitbezogenen bzw. druckbezogenen Grenzwert der zweiten bzw. dritten erfindungsgemäßen Lösung wird sichergestellt, daß der Fahrer die vom Schaltungsablauf her bereits begonnene Rückschaltung zum Zeitpunkt des Schaltungsabbruchs als eigentliche Schaltung höchstens oder nur kaum spürt. Die nur im Extremfall minimale Komforteinschränkung ermöglicht gegenüber der ersten und zweiten erfindunggemäßen Lösung einen bedarfsweise noch späteren Schaltungsabbruch.

In einer Ausgestaltung der Erfindung wird vorgeschlagen, daß der drehzahlbezogene Grenzwert und/oder der zeitbezogene Grenzwert und/oder der druckbezogene Grenzwert in Abhängigkeit von aktuellen Betriebsparametern des Automatgetriebes vorgegeben sind, insbesondere als Funktion eines aktuellen Drehmomentes eines das Automatgetriebe antreibenden Antriebsmotors und/oder als Funktion eines Leistungswunsches oder eines Fahrpedalwinkels des Fahrers und/oder als Funktion einer aktuellen Drehzahl oder Differenzdrehzahl am an der Schaltung beteiligten ersten oder zweiten Schaltelement und/oder als Funktion einer Fahrzeuggeschwindigkeit und/oder als Funktion einer Getriebetemperatur. In vorteilhafter Weise werden also die aktuellen Umweltbedingungen der laufenden Rückschaltung bei der Möglichkeit, einen Schaltungsabbruch zuzulassen, situativ berücksichtigt und hierdurch ein Maximum an Schaltkomfort sichergestellt.

In einer anderen Ausgestaltung der Erfindung wird vorgeschlagen, daß bei Erfülltsein des Abbruchkriteriums der Druck des bei der Rückschaltung abschaltenden Schaltelementes über eine vordefinierte Funktion wieder auf ein Zuschaltdruckniveau erhöht wird, und daß zugleich ein Druck des bei der Rückschaltung zuschaltenden Schaltelementes über eine vordefinierte Funktion wieder auf ein Abschaltdruckniveau reduziert wird. Zuschaltdruckniveau und Abschaltdruckniveau entsprechen dabei jeweils einem Ausgangsdruckniveau des jeweiligen Schaltlementes in der ersten Übersetzungsstufe vor Beginn der Rückschaltung. Die vordefinierte Funktion kann beispielsweise eine zeitgesteuerte und/oder drehzahlgesteuerte und/oder druckschwellwertgesteuerte Rampenfunktion oder auch ein Drucksprung sein.

In einer weiteren Ausgestaltung der Erfindung wird vorgeschlagen, daß bei einem Wechsel von Schub nach Zug bzw. von Schub nach Zug während der Schaltung das Abbruchkriterium erst nach Ablauf einer Zeitstufe gesetzt wird, die zeitgleich mit dem Schub-Zug-Wechsel bzw. Zug-Schub-Wechsel gestartet wird. Diese Ausgestaltung trägt ebenfalls zum Schaltkomfort bei.

Zur Vereinfachung der Schaltungsabläufe innerhalb der elektronischen Getriebesteuerung wird vorgeschlagen, daß sämtliche Steuerungsabbläufe, die der im zeitlichen Verlauf zuerst gestarteten Rückschaltung von der ersten in die zweite Übersetzungsstufe zugeordnet sind, insbesondere schaltungsspezifische Sperrzeiten und ein schaltungsspezifischer Motoreingriff, zeitgleich mit dem Setzen des Abbruchkriteriums in entsprechende Steuerungsabläufe umgewandelt werden, die einer Hochschaltung von der zweiten in die erste Übersetzungsstufe zugeordnet sind.

Im folgenden wird die Erfindung anhand eines in den Zeichnungen dargestellten Ausführungsbeispiels näher erläutert.
Es zeigen:
- Fig. 1: ein System-Schaubild eines Automatgetriebes;
- Fig. 2: eine Tabelle einer Kupplungslogik des Automatgetriebes gemäß Fig. 1;
- Fig. 3: einen ersten beispielhaften Schaltungsablauf und
- Fig. 4: einen zweiten beispielhaften Schaltungsablauf.

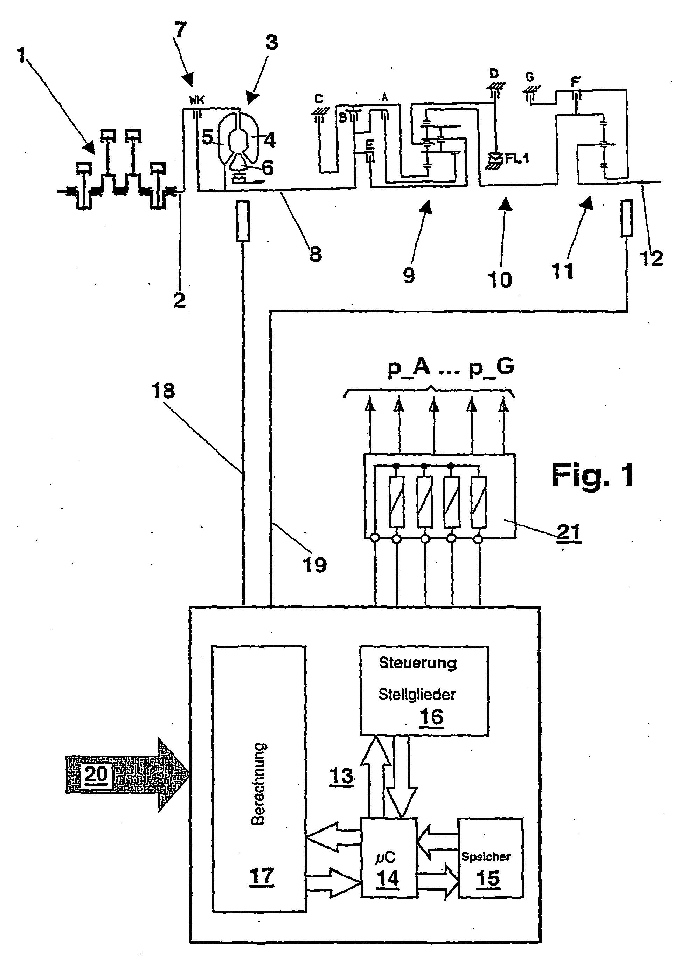

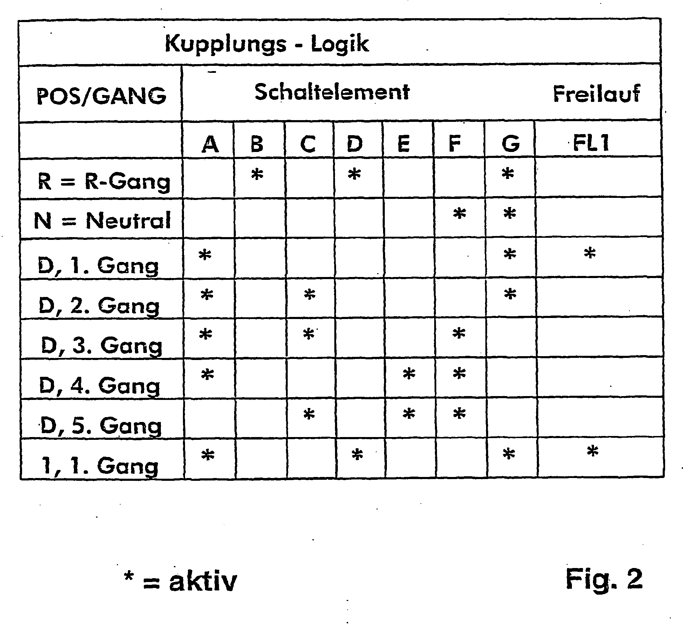

Fig. 1 zeigt ein System-Schaubild eines beispielhaften Automatgetriebes. Dieses besteht aus dem eigentlichen mechanischen Teil, einem hydrodynamischen Wandler 3 als Anfahrelement, einem hydraulischen Steuergerät 21 und einer elektronischen Getriebesteuerung 13. Angetrieben wird das Automatgetriebe von einem Antriebsmotor 1, vorzugsweise einer Brennkraftmaschine, über eine Antriebswelle 2. Dieses ist mit einem Pumpenrad 4 des hydrodynamischen Wandlers 3 drehfest verbunden. Bekanntermaßen besteht der hydrodynamische Wandler 3 aus einem Pumpenrad 4, einem Turbinenrad 5 und einem Leitrad 6. Im Kraftfluß parallel zum hydrodynamischen Wandler 3 ist eine Wandlerkupplung 7 angeordnet. Die Wandlerkupplung 7 und das Turbinenrad 5 führen auf eine Turbinenwelle 8. Bei betätigter Wandlerkupplung 7 hat die Turbinenwelle 8 die gleiche Drehzahl wie die Antriebswelle 2. Der mechanische Teil des Automatgetriebes besteht aus als Kupplungen und Bremsen ausgebildeten Schaltelementen A bis G, einem Freilauf 10 (FL1), einem Ravigneaux-Satz 9 und einem dem Ravigneaux-Satz 9 in Kraftflußrichtung nachgeordneten Planetenradsatz 11. Der Abtrieb des Automatgetriebs erfolgt über eine Getriebeausgangswelle 12. Diese führt vorzugsweise auf ein nicht dargestelltes Differential, welches über zwei Achshalbwellen die Antriebsräder eines nicht dargestellten Kraftfahrzeuges antreiben. Über eine entsprechende Kombination geschlossener Schaltelemente wird eine Gangstufe festgelegt. Die Zuordnung von Kupplungslogik zur Gangstufe des in Fig. 1 dargestellten Automatgetriebes ist aus der Fig. 2 ersichtlich. So wird beispielsweise bei einer Rückschaltung aus dem vierten in den dritten Gang das als Bremse ausgebildete Schaltelement C geschlossen und das als Kupplung ausgebildete Schaltelement E deaktiviert. Wie weiter aus der Tabelle gemäß Fig. 2 ersichtlich, sind die Schaltungen von der zweiten bis zur fünften Übersetzungsstufe jeweils als Überschneidungsschaltungen ausgeführt, wobei stets ein Schaltelement geschlossen und ein anderes Schaltelement geöffnet wird. Da der mechanische Teil des Automatgetriebes für das weitere Verständnis der Erfindung nicht relevant ist, wird auf dessen detaillierte Beschreibung verzichtet.

Die elektronische Getriebesteuerung 13 wählt - unter Berücksichtigung eines vom Fahrer über eine nicht dargestellte Positionswähleinrichtung vorgegebenen Positionssignals - in Abhängigkeit von Eingangsgrößen 18 bis 20 eine entsprechende Fahrstufe aus. Über das hydraulische Steuergerät 21, in dem sich elektro-magnetische Stellglieder befinden, aktiviert sodann die elektronische Getriebesteuerung 13 eine entsprechende Kupplungs-/Brems-Kombination. Während der Schaltübergänge bestimmt die elektronische Getriebesteuerung 13 den Druckverlauf (p_A bis p_G) der an der jeweiligen Schaltung beteiligten Kupplung bzw. Bremse. Die elektronische Getriebesteuerung 13 weist einen Micro-Controller 14, einen Speicher 15, einen Funktionsblock "Steuerung Stellglieder" 16 und einen Funktionsblock "Berechnung" 17. Im Speicher 15 sind die getrieberelevanten Daten abgelegt. Getrieberelevante Daten sind beispielsweise Programme, fahrzeugspezifische Kennwerte und Diagnosedaten. Üblicherweise ist der Speicher 15 als EPROM, EEPROM oder als gepufferter RAM ausgeführt. Im Funktionsblock "Berechnung" 17 werden die für einen Schaltungsverlauf relevanten Daten berechnet. Der Funktionsblock "Steuerung Stellglieder" 16 dient der Ansteuerung der sich im hydraulischen Steuergerät 21 befindenden Stellglieder. Die von der elektronischen Getriebesteuerung 13 verarbeiteten Eingangsgrößen 18 und 19 sind getriebeinterne Signale. Im dargestellten Beispiel ist die Eingangsgröße 18 eine Drehzahl der Turbinenwelle 8 und die Eingangsgröße 19 eine Drehzahl der Getriebeausgangswelle 12. Selbstverständlich können auch weitere getriebeinterne Signale an die elektronische Getriebesteuerung 13 übermittelt werden, beispielsweise eine Getriebetemperatur. Die von der elektronischen Getriebesteuerung 13 ebenfalls verarbeiteten Eingangsgröße 20 repräsentiert vereinfacht alle fahrzeugseitigen und antriebsmotorseitigen Signale, die zur Steuerung der Schaltungen notwendig sind, insbesondere eine einen Leistungswunsch des Fahrers repräsentierende Größe (beispielsweise ein Fahrpedal- bzw. Drosselklappenwinkel oder ein über die Positionswähleinrichtung manuell angeforderter Schaltbefehl), ein das von dem Antriebsmotor 1 abgegebene Drehmoment repräsentierende Größe sowie eine Drehzahl des Antriebsmotors, beispielsweise aber auch eine Temperatur des Antriebsmotors. Üblicherweise werden die Antriebsmotorspezifischen Daten von einem hier nicht dargestellten Motorsteuergerät bereitgestellt.

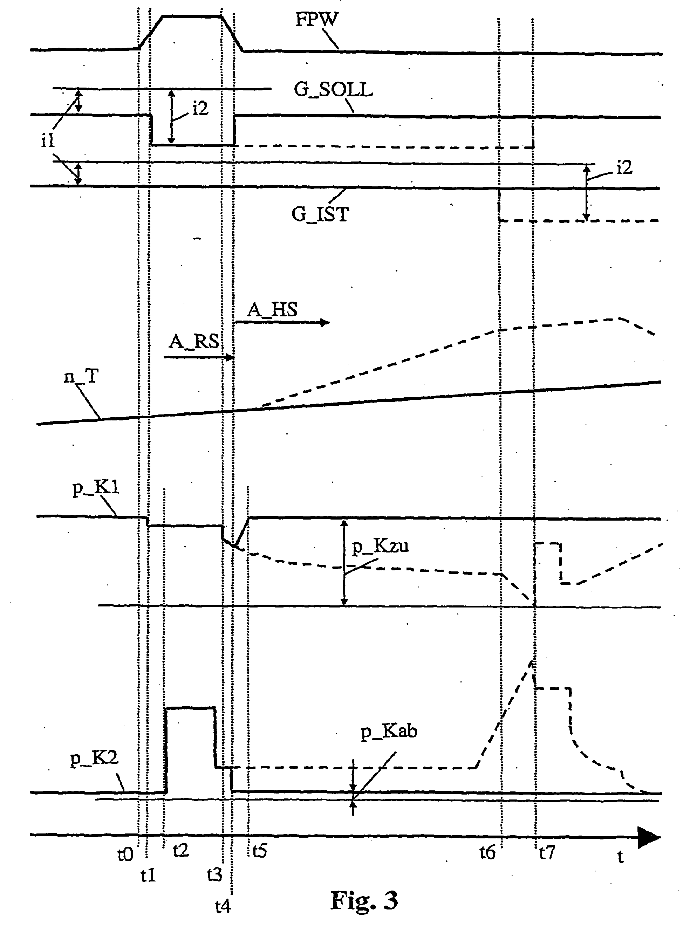

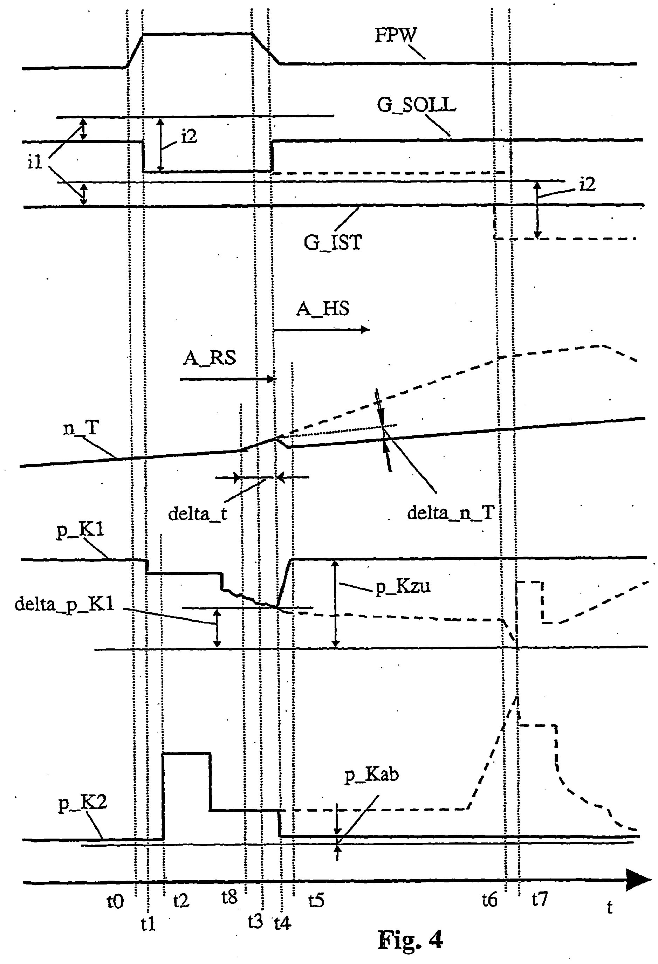

In Fig. 3 und Fig. 4 sind nun zwei beispielhafte erfindungsgemäße Schaltungsabläufe des Automatgetriebes gemäß Fig. 1 dargestellt. Die Schaltungen sind also beispielhaft jeweils als Überschneidungsschaltungen ausgeführt. Zugrunde liegt eine typische Fahrsituation, in der ein Fahrer einen Überholvorgang beginnt und hierbei entsprechend seinem Leistungswunsch eine Rückschaltung auslöst, aber während des Überholvorganges erkennt, daß er den Gegenverkehr passieren lassen muß und infolge dessen sodann seinen Überholvorgang abbricht, indem er das Fahrpedal freigibt. Es wird davon ausgegangen, daß durch die Fahrpedalrücknahme eine Hochschaltkennlinie der elektronischen Getriebesteuerung überschritten wird, nachdem zuvor durch das Niedertreten des Fahrpedals eine Rückschaltkennlinie der elektronischen Getriebesteuerung unterschritten wurde. Das Automatgetriebe beginnt also nach einer Zug-Rückschaltung eine SchubHochschaltung. Zum Vergleich der Schaltungsabläufe sind in beiden Figuren die erfindungsgemäßen Abläufe in ausgezogener Linie und die entsprechenden Abläufe nach dem Stand der Technik in gestrichelter Linie dargestellt.

Fig. 3 zeigt einen ersten beispielhaften Schaltungsablauf gemäß der Erfindung. Im unteren Teil der Darstellung ist eine Zeitachse t eingezeichnet mit diskreten Zeitpunkten t0 bis t7. Weiterhin dargestellt sind die zeitlichen Verläufe eines Fahrpedalwinkels FPW, einer Sollgang-Kennung G_SOLL, einer Istgang-Kennung G_IST, einer Getriebeeingangsdrehzahl n_T, eines Druckes p_K1 eines ersten Schaltelementes, sowie eines Druckes p_K2 eines zweiten Schaltelementes. Dabei repräsentiert der Fahrpedalwinkel FPW beispielhaft den Leistungswunsch des Fahrers. Die Sollgang-Kennung G_SOLL zeigt den Status eines angestrebten Gangwechsels, die Istgang-Kennung G_IST kennzeichnet den tatsächlich eingelegten Gang des Automatgetriebes. Als erstes Schaltelement ist die Kupplung oder Bremse bezeichnet, die bei der Rückschaltung geöffnet wird. Als zweites Schaltelement ist entsprechend die bei dieser Rückschaltung schließende Kupplung oder Bremse bezeichnet.

Zu einem Zeitpunkt t0, in dem sich das Automatgetriebe - wie aus der Istgang-Kennung G_IST ersichtlich - in einer ersten Übersetzungsstufe i1 befindet, betätigt der Fahrer das Fahrpedal und erzeugt so einen Anstieg des Fahrpedalwinkels FPW. Wie aus der Sollgangkennung G_SOLL ersichtlich, wird - entsprechend einer in der elektronischen Getriebesteuerung abgelegten Schaltkennlinie - zu einen Zeitpunkt t1 ein Rückschaltbefehl zum Wechsel von der ersten Übersetzungsstufe i1 in eine zweite Übersetzungsstufe i2 ausgelöst. Gemäß der Fahrpedalwinkel-Vorgabe ist die angeforderte Rückschaltung eine Zug-Rückschaltung.

Zeitgleich mit dem Schaltbefehl zum Zeitpunkt t1 wird der Druck p_K1 des ersten Schaltelementes, das entsprechend der Kupplungslogik der angeforderten Rückschaltung abgeschaltet werden soll, in üblicher Weise um einen vordefinierten Betrag reduziert. Wie aus dem Verlauf des zeitlichen Verlauf des Druckes p_K2 ersichtlich, beginnt eine kurze Zeit später, zum Zeitpunkt t2, eine Schnellfüllphase des zweiten Schaltelementes, welches entsprechend der Kupplungslogik der angeforderten Rückschaltung im Laufe der Rückschaltung geschlossen werden soll.

Noch bevor die zuvor angeforderte Rückschaltung beendet und die Istgang-Kennung G_IST auf den Wert i2 der neuen Übersetzungsstufe gesprungen ist, nimmt der Fahrer zum Zeitpunkt t3 den Fahrpedalwinkel FPW zurück, mit der Folge, daß zu einem Zeitpunkt t4 eine in der elektronischen Getriebesteuerung abgelegten Hochschaltkennlinie überschritten wird. Also springt zum Zeitpunkt t4 die Sollgang-Kennung G_SOLL zurück von i2 auf die ursprüngliche erste Übersetzungsstufe i1. Erfindungsgemäß wird die noch nicht abgeschlossene Zug-Rückschaltung unverzüglich abgebrochen und alle der ursprünglich angeforderten Rückschaltung zugeordneten Schaltabläufe A_RS umgewandelt in entsprechende Schaltabläufe A_HS einer nun unmittelbar beginnenden SchubHochschaltung zurück in die erste Übersetzungsstufe i1, die vor der Rückschaltung aktiviert war.

Zum Zeitpunkt t4 des Schaltbefehls zum Wechsel zurück in die erste Übesetzungsstufe i1 ist das abschaltende (erste) Schaltelement noch drehmomentführend und das zuschaltende (zweite) Schaltelement noch nicht drehmomentführend. Dies wird durch den zeitlichen Verlauf der Getriebeeingangsdrehzahl n_T verdeutlicht, der keinerlei Drehzahlreaktion aufgrund einer beginnenden Überschneidung der Drehmomentübertragung beider an der Rückschaltung beteiligten Schaltelemente erkennen läßt.

Wie aus dem zeitlichen Verlauf des Druckes p_K2 ersichtlich, wird der Schaltdruck des zweiten Schaltelementes zum Zeitpunkt t4 schlagartig auf ein Abschaltdruckniveau p_Kab reduziert. Anstelle dieses beispielhaften Drucksprungs kann in einer anderen Ausgestaltung auch eine applizierbare beliebige Druckreduzierungsfunktion vorgesehen sein, beispielsweis eine zeit- und/oder druckschwellengesteuerte Druckrampe. Das Abschaltdruckniveau p_Kab entspricht dabei dem Druckniveau des zweiten Schaltelementes vor Beginn der ursprünglich angeforderten Rückschaltung. Betragsmäßig kann das Abschaltdruckniveau p_Kab beispielsweise zumindest annährend "Null" sein, aber auch ein Vorbefülldruck zur Anhebung der Reaktionsgeschwindigkeit dieses Schaltelementes bei einem angeforderten Schließvorgang.

Wie aus dem zeitlichen Verlauf des Druckes p_K1 ersichtlich, wird zum Zeitpunkt t4 eine Druckrampe gestartet zur Anhebung des Schaltdruckes des ersten Schaltelementes auf ein Zuschaltdruckniveau p_Kzu. Zum Zeitpunkt t5 hat der Druck p_K1 das Zuschaltdruckniveau p_Kzu erreicht. Dabei entspricht das Zuschaltdruckniveau p_Kzu dem üblicherweise vom Drehmoment des Antriebsmotors abhängigen Druckniveau des ersten Schaltelementes vor Beginn der ursprünglich angeforderten Rückschaltung. Die Druckrampe kann beispielsweise drehzahl- und/oder druckschwellwertabhängig vorgegen sein, wobei die Parameter der Druckwerte vorzugsweise komfortorientiert appliziert sind. Anstelle der beispielhaften Druckrampe kann in einer anderen Ausgestaltung auch eine applizierbare beliebige Druckanhebungsfunktion vorgesehen sein, beispielsweise auch ein Drucksprung.

Aus dem zeitlichen Verlauf der Getriebeingangsdrehzahl n_T ist klar erkennbar, daß der erfindungsgemäße Abbruch der Überschneidungs-Rückschaltung mit keinen Komforteinbußen (keine Drehzahlreaktion) verbunden ist.

Klar ersichtlich ist auch der Gewinn an Spontanität und die Reduzierung der vom Fahrer spürbaren Schalthäufigkeit des Automatgetriebes im Vergleich zum Stand der Technik. Wie aus den gestrichelt dargestellten Steuerungsabläufen und der dazu korrespondierenden Drehzahlreaktion eines vergleichbaren Schaltungsablaufs gemäß dem Stand der Technik ersichtlich, würde ohne das erfindungsgemäße Verfahren die ursprünglich angeforderte Überschneidungs-Rückschaltung zuerst vollständig beendet. Erst nach dem Erreichen der Synchrondrehzahl der zweiten Übersetzungsstufe i2 (Zeitpunkt t6), mit dem Erreichen eines Verriegelungsdruckniveaus des jetzt alleine drehmomentführenden zweiten Schaltelementes (Zeitpunkt t7), würde gemäß dem Stand der Technik der Schaltbefehl zur Ausführung einer Schubhochschaltung zurück in die erste Übersetzungsstufe i1 gesetzt.

Anhand Fig. 4 wird nun ein zweiter beispielhafter Schaltungsablauf gemäß der Erfindung erläutert. Wie in Fig. 3 ist im unteren Teil der Darstellung eine Zeitachse t eingezeichnet, diesmal mit diskreten Zeitpunkten t0 bis t8. Ebenfalls dargestellt sind die zeitlichen Verläufe des Fahrpedalwinkels FPW, der Sollgang-Kennung G_SOLL, der Istgang-Kennung G_IST, der Getriebeeingangsdrehzahl n_T, sowie der Drücke p_K1 und p_K2 des ersten bzw. zweiten Schaltelementes. Als erstes Schaltelement ist unverändert die Kupplung oder Bremse bezeichnet, die bei der Rückschaltung geöffnet wird, und als zweites Schaltelement entsprechend die bei dieser Rückschaltung schließende Kupplung oder Bremse.

Im Unterschied zu dem in Fig. 3 dargestellten Schaltungsablauf erfolgt bei dem in Fig. 4 dargestellten Schaltungsablauf der erfindungsgemäße Abbruch der laufenden Rückschaltung erst zu einem Zeitpunkt der Rückschaltung, bei dem die Getriebeeingangsdrehzahl n_T die Synchrondrehzahl der vor der Rückschaltung eingelegten ersten Übersetzungsstufe i1 bereits geringfügig um eine Differenzdrehzahl delta_n_T verlassen hat.

Wie in Fig. 4 ersichtlich, befindet sich das Automatgetriebe zum Zeitpunkt t0, in dem der Fahrer das Fahrpedal betätigt und so einen Anstieg des Fahrpedalwinkels FPW erzeugt, in der ersten Übersetzungsstufe i1. Zum Zeitpunkt t1 erfolgt der Rückschaltbefehl zum Wechsel von der ersten in die zweite Übersetzungsstufe i2. Gemäß der Fahrpedalwinkel-Vorgabe ist die angeforderte Rückschaltung beispielhaft wieder eine Zug-Rückschaltung.

Zeitgleich mit dem Schaltbefehl zum Zeitpunkt t1 wird der Druck p_K1 des ersten Schaltelementes in üblicher Weise um einen vordefinierten Betrag reduziert. Eine kurze Zeit später, zum Zeitpunkt t2, beginnt die übliche Schnellfüllphase des zweiten Schaltelementes, gefolgt von einer Füllausgleichsphase (Druckverlauf p_K2), während der der Kupplungsdruck p_K1 des ersten Schaltelementes weiter (geregelt) reduziert wird.

Zu einem Zeitpunkt t8 kann das abschaltende erste Schaltelement das volle Drehmoment der Zugrückschaltung nicht mehr übertragen mit der Folge, daß die Turbinendrehzahl n_T die Synchrondrehzahl der ersten Übersetzungsstufe i1 verläßt und zu steigen beginnt.

Noch bevor die zuvor angeforderte Rückschaltung beendet und die Istgang-Kennung G_IST auf den Wert i2 der neuen Übersetzungsstufe gesprungen ist, nimmt der Fahrer zum Zeitpunkt t3 den Fahrpedalwinkel FPW zurück, mit der Folge, daß zu einem Zeitpunkt t4 eine in der elektronischen Getriebesteuerung abgelegten Hochschaltkennlinie überschritten wird. Also springt zum Zeitpunkt t4 die Sollgang-Kennung G_SOLL zurück von i2 auf i1.

Erfindungswesentlich für den zu diesem Zeitpunkt t4 noch möglichen und auch unmittelbar eingeleiteten Abbruch der Rückschaltung (Umwandlung aller der ursprünglich angeforderten Rückschaltung zugeordneten Schaltabläufe A_RS in entsprechende Schaltabläufe A_HS der nun beginnenden Hochschaltung zurück in die erste Übersetzungsstufe il) ist, daß entweder die Differenzdrehzahl delta_n_T der Getriebeeingangsdrehzahl n_T von der Synchondrehzahl der ersten Übersetzungsstufe i1 ein vordefinierten drehzahlbezogenen Grenzwert noch nicht überschritten hat, oder daß eine Zeitdifferenz delta_t - beginnend ab dem Verlassen der Getriebeeingangsdrehzahl n_T von der Synchondrehzahl der ersten Übersetzungsstufe i1 - einen vordefinierten zeitbezogenen Grenzwert noch nicht überschritten hat, oder daß ein aktueller Druck delta_p_K1 des abschaltenden ersten Schaltelementes einen vordefinierten druckbezogenen Grenzwert noch nicht unterschritten hat.

Wertemäßig orientieren sich die entsprechenden drehzahl-, zeit- und druckbezogenen Grenzwerte dabei vorzugsweise am Schaltkomfort und sind also derart vordefiniert, daß ein Abbruch der Rückschaltung nicht mehr zulässig ist, wenn der Fahrer die beginnende Drehmomentübernahme des zuschaltenden zweiten Schaltelementes spürt. Je nach Schaltungstyp und/oder Intensität der Fahrerwunschänderung (beispielsweise Änderungsgeschwindigkeit oder Änderungsbetrag des Fahrpedalwinkels FPW) kann auch eine gewisse Komforteinbuße akzeptiert werden, insbesondere beim Abbruch eingeleiteter Doppel- oder Mehrfach-Rückschaltungen und beim Abbruch mit schneller Fahrpedalrücknahme. Selbstverständlich können die drehzahl-, zeit- und druckbezogenen Grenzwerte funktionell miteinander verknüpft sein und auch in Abhängigkeit von aktuellen Betriebsparametern des Automatgetriebes vorgegeben sein, beispielsweise als Funktion eines aktuellen Drehmomentes des Antriebsmotors und/oder als Funktion des Leistungswunsches bzw. Fahrpedalwinkels des Fahrers und/oder als Funktion einer aktuellen Drehzahl oder Differenzdrehzahl am an der Schaltung beteiligten ersten oder zweiten Schaltelement und/oder als Funktion einer Fahrzeuggeschwindigkeit und/oder als Funktion einer Getriebetemperatur.

Ähnlich dem anhand Fig. 3 beschriebenen ersten Schaltungsablauf, beginnt zeitgleich mit dem Abbruch der Rückschaltung zum Zeitpunkt t4 die Überleitung der Drücke p_K1 und p_K2 der beiden Schaltelemente zurück auf das Zuschaltdruckniveau p_Kzu bzw. Abschaltdruckniveau p_Kab. Im zeitlichen Verlauf dieser Drucküberleitung wird die Getriebeeingangsdrehzahl n_T wieder auf die Synchrondrehzahl der ersten Übersetzungsstufe i1 geführt. In dem in Fig. 4 dargestellten Beispiel erfolgt der Übergang des Druckes p_K1 des ersten Schaltelementes auf das üblicherweise vom Drehmoment des Antriebsmotors abhängige Zuschaltdruckniveau p_Kzu über eine Druckrampe, der Übergang des Druckes p_K2 des zweiten Schaltelementes auf das Abschaltdruckniveau p_Kab über einen Drucksprung. Hinsichtlich möglicher Ausgestaltungen der Druckübergänge wird auf den zuvor detailliert beschriebene ersten erfindungsgemäßen Schaltablauf verwiesen. Vorzugsweise sind die Druckübergänge derart appliziert, daß der Fahrer den Abbau der zum Zeitpunkt des Abbruchs vorliegenden Differenzdrehzahl delta_n_T, der bis zum Zeitpunkt t5 abgeschlossen ist, zumindest nicht zu stark komfortmindernd empfindet, wobei auch die Schaltungsart und/oder die Intensität der Fahrerwunschänderung berücksichtigt sein können.

### Bezugszeichen

- 1: Antriebsmotor
- 2: Antriebswelle
- 3: hydrodynamischer Wandler
- 4: Pumpenrad des hydrodynamischen Wandlers
- 5: Turbinenrad des hydrodynamischen Wandlers
- 6: Leitrad des hydrodynamischen Wandlers
- 7: Wandlerkupplung
- 8: Turbinenwelle
- 9: Ravigneaux-Satz
- 10: Freilauf FL1
- 11: Planetenradsatz
- 12: Getriebeausgangswelle
- 13: elektronische Getriebesteuerung
- 14: Micro-Controller
- 15: Speicher
- 16: Funktionsblock Steuerung Stellglieder
- 17: Funktionsblock Berechnung
- 18: getriebebezogene Eingangsgröße, Drehzahlsignal der Turbinenwelle
- 19: getriebebezogene Eingangsgröße, Drehzahlsignal der Getriebeausgangswelle
- 20: fahrzeug-/antriebsmotorbezogene Eingangsgröße
- 21: hydraulisches Steuergerät
- A ... G: Schaltelement, Kupplung bzw. Bremse
- p_A ... p_G: Druck der Schaltelemente A bis G
- A_HS: Steuerungsabläufe einer Hochschaltung
- A_RS: Steuerungsabläufe einer Rückschaltung
- delta_n_T: Drehzahldifferenz
- delta_p_K1: aktueller Druck
- delta_t: Zeitdifferenz
- FPW: Fahrpedalwinkel
- G_IST: Istgang-Kennung
- G_SOLL: Sollgang-Kennung
- i1: erstes Übersetzungsverhältnis
- i2: zweites Übersetzungsverhältnis
- n_T: Getriebeeingangsdrehzahl, Drehzahl der Turbinenwelle
- p_K1: Druck eines ersten Schaltelementes
- p_K2: Druck eines zweiten Schaltelementes
- p_Kab: Abschaltdruckniveau des zweiten Schaltelementes
- p_Kzu: Zuschaltdruckniveau des ersten Schaltelementes
- t: Zeitachse
- t0 ... t8: diskrete Zeitpunkte

## Patentansprüche

1. Verfahren zur Durchführung von Schaltungen eines Kraftfahrzeug-Automatgetriebes, insbesondere von Überschneidungsschaltungen, bei denen während einer Schaltung ein als Kupplung oder Bremse ausgebildetes erstes Schaltelement öffnet und ein als Kupplung oder Bremse ausgebildetes zweites Schaltelement schließt, wobei zur Erhöhung einer Spontanität und zur Reduzierung einer Schalthäufigkeit des Automatgetriebes eine Rückschaltung von einer ersten Übersetzungsstufe (i1) in eine zweite Übersetzungsstufe (i2) verzögerungsfrei abgebrochen und in die erste Übersetzungsstufe (i1) zurückgekehrt wird, wenn ein Abbruchkriterium erkannt wird, **dadurch gekennzeichnet, dass** das Abbruchkriterium dann gesetzt wird, wenn eine von einem Fahrer des Kraftfahrzeugs vorgebbare Anforderung zu einer Hochschaltung erkannt wird, bevor sich eine aktuelle Getriebeeingangsdrehzahl (n_T) um einen vordefinierten drehzahlbezogenen Grenzwert von einer Synchrondrehzahl der ersten Übersetzungsstufe (i1) entfernt hat, wobei dieser drehzahlbezogene Grenzwert in Abhängigkeit von einer Intensität einer Fahrerwunschänderung vorgegeben sind, insbesondere in Abhängigkeit einer Änderungsgeschwindigkeit und/oder eines Änderungsbetrags eines Fahrpedalwinkels (FPW).

2. Verfahren nach Anspruch 1, **dadurch gekennzeichnet, dass** das Abbruchkriterium nur dann gesetzt wird, wenn eine Zeitstufe, die gestartet wird, wenn die aktuelle Getriebeeingangsdrehzahl (n_T) die Synchrondrehzahl der ersten Übersetzungsstufe (i1) verläßt, einen vordefinierten zeitbezogenen Grenzwert noch nicht überschritten hat, und/oder wenn ein Druck (p_K1) des abschaltenden ersten Schaltelementes einen vordefinierten druckbezogenen Grenzwert noch nicht unterschritten hat.

3. Verfahren nach Anspruch 2, **dadurch gekennzeichnet, dass** dieser zeitbezogene bzw. druckbezogene Grenzwert in Abhängigkeit von einer Intensität einer Fahrerwunschänderung vorgegeben ist, insbesondere in Abhängigkeit einer Änderungsgeschwindigkeit und/oder eines Änderungsbetrags eines Fahrpedalwinkels (FPW).

4. Verfahren nach dem Oberbegriff von Anspruch 1, **dadurch gekennzeichnet, dass** das Abbruchkriterium dann gesetzt wird, wenn eine von einem Fahrer des Kraftfahrzeugs vorgebbare Anforderung zu einer Hochschaltung erkannt wird, bevor eine Zeitstufe, die gestartet wird, wenn eine aktuelle Getriebeeingangsdrehzahl (n_T) eine Synchrondrehzahl der ersten Übersetzungsstufe (i1) verläßt, einen vordefinierten zeitbezogenen Grenzwert überschritten hat, wobei dieser zeitbezogene Grenzwert in Abhängigkeit von einer Intensität einer Fahrerwunschänderung vorgegeben sind, insbesondere in Abhängigkeit einer Änderungsgeschwindigkeit und/oder eines Änderungsbetrags eines Fahrpedalwinkels (FPW).

5. Verfahren nach Anspruch 4, **dadurch gekennzeichnet, dass** das Abbruchkriterium nur dann gesetzt wird, wenn sich die aktuelle Getriebeeingangsdrehzahl (n_T) noch nicht um einen vordefinierten drehzahlbezogenen Grenzwert von der Synchrondrehzahl der ersten Übersetzungsstufe (i1) entfernt hat, und/oder wenn ein Druck (p_K1) des abschaltenden ersten Schaltelementes einen vordefinierten druckbezogenen Grenzwert noch nicht unterschritten hat.

6. Verfahren nach Anspruch 5, **dadurch gekennzeichnet, dass** dieser drehzahlbezogene bzw. druckbezogene Grenzwert in Abhängigkeit von einer Intensität einer Fahrerwunschänderung vorgegeben ist, insbesondere in Abhängigkeit einer Änderungsgeschwindigkeit und/oder eines Änderungsbetrags eines Fahrpedalwinkels (FPW).

7. Verfahren nach dem Oberbegriff von Anspruch 1, **dadurch gekennzeichnet, dass** das Abbruchkriterium dann gesetzt wird, wenn eine von einem Fahrer des Kraftfahrzeugs vorgebbare Anforderung zu einer Hochschaltung erkannt wird, bevor ein Druck (p_K1) des abschaltenden ersten Schaltelementes einen vordefinierten druckbezogenen Grenzwert unterschritten hat, wobei dieser druckbezogene Grenzwert in Abhängigkeit von einer Intensität einer Fahrerwunschänderung vorgegeben sind, insbesondere in Abhängigkeit einer Änderungsgeschwindigkeit und/oder eines Anderungsbetrags eines Fahrpedalwinkels (FPW).

8. Verfahren nach Anspruch 7, **dadurch gekennzeichnet, dass** das Abbruchkriterium nur dann gesetzt wird, wenn eine Zeitstufe, die gestartet wird, wenn die aktuelle Getriebeeingangsdrehzahl (n_T) die Synchrondrehzahl der ersten Übersetzungsstufe (i1) verläßt, einen vordefinierten zeitbezogenen Grenzwert noch nicht überschritten hat, und/oder wenn sich die aktuelle Getriebeeingangsdrehzahl (n_T) noch nicht um einen vordefinierten drehzahlbezogenen Grenzwert von der Synchrondrehzahl der ersten Übersetzungsstufe (i1) entfernt hat.

9. Verfahren nach Anspruch 8, **dadurch gekennzeichnet, dass** dieser zeitbezogene bzw. drehzahbezogene Grenzwert in Abhängigkeit von einer Intensität einer Fahrerwunschänderung vorgegeben ist, insbesondere in Abhängigkeit einer Änderungsgeschwindigkeit und/oder eines Änderungsbetrags eines Fahrpedalwinkels (FPW).

10. Verfahren nach einem der vorigen Ansprüche, **dadurch gekennzeichnet, dass** der drehzahlbezogene Grenzwert und/oder der zeitbezogene Grenzwert und/oder der druckbezogene Grenzwert in Abhängigkeit von aktuellen Betriebsparametern des Automatgetriebes vorgegeben sind, insbesondere als Funktion eines aktuellen Drehmomentes eines das Automatgetriebe antreibenden Antriebsmotors (1) und/oder als Funktion eines Leistungswunsches oder Fahrpedalwinkels (FPW) des Fahrers und/oder als Funktion einer aktuellen Drehzahl oder Differenzdrehzahl am ersten oder zweiten Schaltelement und/oder als Funktion einer Fahrzeuggeschwindigkeit und/oder als Funktion einer Getriebetemperatur.

11. Verfahren nach einem der vorigen Ansprüche, **dadurch gekennzeichnet, dass** der drehzahlbezogene Grenzwert und/oder der zeitbezogene Grenzwert und/oder der druckbezogene Grenzwert in Abhängigkeit von einem Schaltungstyp der Rückschaltung vorgegeben sind.

12. Verfahren nach einem der vorigen Ansprüche, **dadurch gekennzeichnet, dass** bei Erfülltsein des Abbruchkriteriums der Druck (p_K1) des ersten Schaltelementes über eine vordefinierte Druckerhöhungsfunktion auf ein Zuschaltdruckniveau (p_Kzu) erhöht wird und zugleich ein Druck (p_K2) des zweiten Schaltelementes über eine vordefinierte Druckreduzierungsfunktion auf ein Abschaltdruckniveau (p_Kab) reduziert wird, wobei das Zuschaltdruckniveau (p_Kzu) des ersten Schaltelementes und das Abschaltdruckniveau (p_Kab) des zweiten Schaltelementes jeweils einem Ausgangsdruckniveau des ersten bzw. zweiten Schaltlementes in der ersten Übersetzungsstufe (i1) vor Beginn der Rückschaltung entspricht.

13. Verfahren nach Anspruch 12, **dadurch gekennzeichnet, dass** die vordefinierte Druckerhöhungsfunktion und/oder die vordefinierte Druckreduzierungsfunktion eine Rampenfunktion ist.

14. Verfahren nach Anspruch 12, **dadurch gekennzeichnet, dass** die vordefinierte Druckerhöhungsfunktion und/oder die vordefinierte Druckreduzierungsfunktion ein Drucksprung ist.

15. Verfahren nach Anspruch 12, 13 oder 14, **dadurch gekennzeichnet, dass** das Abschaltdruckniveau (p_Kab) des zweiten Schaltelementes betragsmäßig zumindest annähernd "Null" ist.

16. Verfahren nach Anspruch 12, 13 oder 14, **dadurch gekennzeichnet, dass** das Abschaltdruckniveau (p_Kab) des zweiten Schaltelementes ein Vorbefülldruck des zweiten Schaltelementes ist.

17. Verfahren nach einem der vorigen Ansprüche, **dadurch gekennzeichnet, dass** bei einem Wechsel von Schub nach Zug bzw. von Zug nach Schub während der Rückschaltung das Abbruchkriterium erst nach Ablauf einer bei dem Wechsel von Schub nach Zug bzw. von Zug nach Schub gestarteten vordefinierten Zeitstufe gesetzt wird.

18. Verfahren nach einem der vorigen Ansprüche, **dadurch gekennzeichnet, dass** sämtliche der Rückschaltung von der ersten Übersetzungsstufe (i1) in die zweite Übersetzungsstufe (i2) zugeordneten Steuerungsabläufe (A_RS), insbesondere schaltungsspezifische Sperrzeiten und ein schaltungsspezifischer Motoreingriff, zeitgleich mit dem Setzen des Abbruchkriteriums in entsprechende Steuerungsabläufe (A_HS) einer Hochschaltung von der zweiten Übersetzungsstufe (i2) in die erste Übersetzungsstufe (i1) umgewandelt werden.

## Claims

1. Method for performing the shifts of an automatic automotive transmission, especially of overlapping shifts during which a clutch-type or a brake-type first shifting component opens and a clutch-type or brake-type second shifting component closes, with increased spontaneity and reduced shifting frequency of the automatic transmission being achieved through instantaneous abortion of a downshift from a first ratio (i1) to a second ratio (i2) and return to the first ratio (i1) if an abortion criterion is recognized, **characterized in that** the abortion criterion is set if a driver-settable upshift request is recognized before a current transmission input speed (n_T) has departed from a synchronous speed of the first ratio (i1) by a predefined speed-related limit value, with this speed-related limit value being dependent on the intensity of the driver's change request, especially on the speed of change and/or the amount of change of a gas-pedal angle (FPW).

2. Method according to claim 1, **characterized in that** the abortion criterion is only set if a time sequence, which is started when the current transmission input speed (n_T) departs from the synchronous speed of the first ratio (i1), has not yet exceeded a predefined time-related limit value, and/or if a pressure (p_K1) of the disengaging first shifting component has not yet fallen below a predefined pressure-related limit value.

3. Method according to claim 2, **characterized in that** this time-related or pressure-related limit value is dependent on the intensity of the driver's change request, especially on the speed of change and/or the amount of change of a gas-pedal angle (FPW).

4. Method according to the preamble of claim 1, **characterized in that** the abortion criterion is set if a driver-settable upshift request is recognized before a time sequence, which is started when a current transmission input speed (n_T) departs from a synchronous speed of the first ratio (i1), exceeds a predefined time-related limit value, with this time-related limit value being dependent on the intensity of the driver's change request, especially on the speed of change and/or the amount of change of a gas-pedal angle (FPW).

5. Method according to claim 4, **characterized in that** the abortion criterion is only set if the current transmission input speed (n_T) has not yet departed from the synchronous speed of the first ratio (i1) by a predefined speed-related limit value, and/or if a pressure (p_K1) of the disengaging first shifting component has not yet fallen below a predefined pressure-related limit value.

6. Method according to claim 5, **characterized in that** this speed-related or pressure-related limit value is dependent on the intensity of the driver's change request, especially on the speed of change and/or the amount of change of a gas-pedal angle (FPW).

7. Method according to the preamble of claim 1, **characterized in that** the abortion criterion is set if a driver-settable upshift request is recognized before a pressure (p_K1) of the disengaging first shifting component has fallen below a predefined pressure-related limit value, with this pressure-related limit value being dependent on the intensity of the driver's change request, especially on the speed of change and/or the amount of change of a gas-pedal angle (FPW).

8. Method according to claim 7, **characterized in that** the abortion criterion is only set if a time sequence, which is started when the current transmission input speed (n_T) departs from the synchronous speed of the first ratio (i1), has not yet exceeded a predefined time-related limit value, and/or if the current transmission input speed (n_T) has not yet departed from the synchronous speed of the first ratio (i1) by a predefined speed-related limit value.

9. Method according to claim 8, **characterized in that** this time-related or speed-related limit value is dependent on the intensity of the driver's change request, especially on the speed of change and/or the amount of change of a gas-pedal angle (FPW).

10. Method according to one of the preceding claims, **characterized in that** the speed-related limit value and/or the time-related limit value and/or the pressure-related limit value is/are dependent on current operating parameters of the automatic transmission, especially as a function of a current torque of a driving engine (1) driving the automatic transmission, and/or as a function of the driver's performance request or gas-pedal change (FPW), and/or as a function of a current speed or differential speed on the first or second shifting component, and/or as a function of a vehicle speed, and/or as a function of a transmission temperature.

11. Method according to one of the preceding claims, **characterized in that** the speed-related limit value and/or the time-related limit value and/or the pressure-related limit value is/are dependent on the type of downshift.

12. Method according to one of the preceding claims, **characterized in that** with the abortion criterion condition being met, the pressure (p_K1) of the first shifting component is raised via a predefined pressure-increasing function to an engagement pressure level (p_Kzu) and that simultaneously a pressure (p_K2) of the second shifting component is reduced via a predefined pressure-reducing function to a disengagement pressure level (p_Kab), with the engagement pressure level (p_Kzu) of the first shifting component and the disengagement pressure level (p_Kab) of the second shifting component corresponding to an initial pressure level of the first or the second shifting component in the first ratio (i1) before the start of the downshift.

13. Method according to claim 12, **characterized in that** the predefined pressure-increasing function and/or the predifined pressure-reducing function constitute(s) a ramp function.

14. Method according to claim 12, **characterized in that** the predefined pressure-increasing function and/or the predefined pressure-reducing function constitute(s) a pressure jump.

15. Method according to claim 12, 13 or 14, **characterized in that** the disengagement pressure level (p_Kab) of the second shifting component amounts to approximately "zero".

16. Method according to claim 12, 13 or 14, **characterized in that** the disengagement pressure level (p_Kab) of the second shifting component constitutes a prefilling pressure of the second shifting component.

17. Method according to one of the preceding claims, **characterized in that** changing from acceleration to deceleration or from deceleration to acceleration during a downshift results in the abortion criterion being set only after expiration of a time sequence started by the change from acceleration to deceleration or from deceleration to acceleration.

18. Method according to one of the preceding claims, **characterized in that**, simultaneously with the setting of the abortion criterion, all control processes (A_RS) assigned to the downshift from the first ratio (i1) to the second ratio (i2), especially shift-specific locking times and a shift-specific engine intervention, are converted into corresponding control processes (A_HS) of an upshift from the second ratio (i2) to the first ratio (i1).

## Revendications

1. Procédé d'exécution de changements de rapports d'une transmission automatique d'un véhicule automobile, en particulier de changements de rapports par chevauchement, pendant lesquels un premier élément de commande réalisé comme embrayage ou frein s'ouvre et un deuxième élément de commande réalisé comme embrayage ou frein se ferme, sachant que pour l'augmentation de la spontanéité et pour la réduction d'une fréquence de changement de rapports d'une boîte automatique un passage descendant d'un premier niveau de démultiplication (i1) à un deuxième niveau de démultiplication (i2) est interrompu sans retard et ramené au premier niveau de démultiplication (i1) dans le cas où un critère d'interruption est détecté, **caractérisé en ce que** le critère d'interruption est validé au moment où est détectée une requête de passage montant qui peut être formulée par un conducteur du véhicule automobile, et cela avant qu'un régime d'entrée actuel de la boîte de vitesses (n_T) se soit éloigné - d'un seuil prédéfini et spécifique au régime - d'un régime synchrone du premier niveau de démultiplication (i1), sachant que ce seuil spécifique au régime est formulé en fonction d'une intensité d'une variation du souhait du conducteur, en particulier en fonction d'une vitesse de variation et/ou d'une valeur de variation d'un angle de la pédale d'accélérateur (FPW).

2. Procédé selon la revendication 1, **caractérisé en ce que** le critère d'interruption n'est validé qu'au moment où un intervalle de temps - qui est démarré dès que le régime d'entrée actuel de la boîte de vitesses (n_T) quitte le régime synchrone du premier niveau de démultiplication (i1) - n'aura pas encore dépassé un seuil prédéfini spécifique au temps et/ou lorsque'une pression (p_K1) du premier élément de commande à découpage n'aura pas encore dépassé vers le bas un seuil prédéfini spécifique à la pression.

3. Procédé selon la revendication 2, **caractérisé en ce que** ce seuil spécifique au temps ou à la pression est formulé en fonction d'une intensité d'une variation du souhait du conducteur, en particulier en fonction d'une vitesse de variation et/ou d'une valeur de variation d'un angle de la pédale d'accélérateur (FPW).

4. Procédé selon le préambule de la revendication 1, **caractérisé en ce que** le critère d'interruption est validé au moment où est détectée une requête de passage montant formulée par un conducteur du véhicule automobile avant qu'un intervalle de temps - qui est démarré lorsque un régime d'entrée actuel de la boîte de vitesses (n_T) quitte un régime synchrone du premier niveau de démultiplication (i1) - aura dépassé un seuil prédéfini spécifique au temps, sachant que ce seuil spécifique au temps est formulé en fonction d'une intensité d'une variation du souhait du conducteur, en particulier en fonction d'une vitesse de variation et/ou d'une valeur de variation d'un angle de la pédale d'accélérateur (FPW).

5. Procédé selon la revendication 4, **caractérisé en ce que** le critère d'interruption n'est validé que dans le cas où le régime d'entrée actuel de la boîte de vitesses (n_T) ne se sera pas encore éloigné - d'un seuil prédéfini spécifique au régime - du régime synchrone du premier niveau de démultiplication (i1), et/ou lorsque'une pression (p_K1) du premier élément de commande à découpage n'aura pas encore dépassé vers le bas un seuil prédéfini spécifique à la pression.

6. Procédé selon la revendication 5, **caractérisé en ce que** ce seuil spécifique au régime ou à la pression est formulé en fonction d'une intensité d'une variation du souhait du conducteur, en particulier en fonction d'une vitesse de variation et/ou d'une valeur de variation d'un angle de la pédale d'accélérateur (FPW).

7. Procédé selon le préambule de la revendication 1, **caractérisé en ce que** le critère d'interruption est validé au moment où est détectée une requête de passage montant formulée par un conducteur du véhicule automobile avant qu'une pression (p_K1) du premier élément de commande à découpage n'aura dépassé vers le bas un seuil prédéfini spécifique à la pression, sachant que ce seuil spécifique à la pression est formulé en fonction d'une intensité d'une variation du souhait du conducteur, en particulier en fonction d'une vitesse de variation et/ou d'une valeur de variation de l'angle de la pédale d'accélérateur (FPW).

8. Procédé selon la revendication 7, **caractérisé en ce que** le critère d'interruption n'est validé qu'au moment où un intervalle de temps - qui est démarré dès que le régime d'entrée actuel de la boîte de vitesses (n_T) quitte le régime synchrone du premier niveau de démultiplication (i1) - n'aura pas encore dépassé un seuil prédéfini spécifique au temps et/ou lorsque le régime d'entrée actuel de la boîte de vitesses (n_T) ne se sera pas encore éloigné - d'un seuil prédéfini spécifique au régime - du régime synchrone du premier niveau de démultiplication (i1).

9. Procédé selon la revendication 8, **caractérisé en ce que** ce seuil spécifique au temps ou au régime est formulé en fonction d'une intensité d'une variation du souhait du conducteur, en particulier en fonction d'une vitesse de variation et/ou d'une valeur de variation d'un angle de la pédale d'accélérateur (FPW).

10. Procédé selon une des revendications précédentes, **caractérisé en ce que** le seuil spécifique au régime et/ou le seuil spécifique au temps et/ou le seuil spécifique à la pression sont formulés en fonction de paramètres de service actuels de la transmission automatique, en particulier en fonction d'un couple actuel d'un moteur d'entraînement (1) entraînant la transmission automatique, et/ou en fonction d'une puissance souhaitée par le conducteur ou d'un angle de la pédale d'accélérateur (FPW) appliqué par le conducteur et/ou en fonction d'un régime actuel ou d'un régime différentiel au niveau du premier ou du deuxième élément de commande et/ou en fonction d'une vitesse de véhicule et/ou en fonction d'une température de la boîte de vitesses.

11. Procédé selon une des revendications précédentes, **caractérisé en ce que** le seuil spécifique au régime et/ou le seuil spécifique au temps et/ou le seuil spécifique à la pression sont formulés en fonction d'un type de commande du rétrogradage.

12. Procédé selon une des revendications précédentes, **caractérisé en ce que** en cas de satisfaction du critère d'interruption la pression (p_K1) du premier élément de commande est augmentée par l'intermédiaire d'une fonction prédéfinie d'augmentation de la pression jusqu'à un niveau de pression d'enclenchement (p_Kzu) et **en ce que**, en même temps, une pression (p_K2) du deuxième élément de commande est réduite par l'intermédiaire d'une fonction prédéfinie de réduction de la pression jusqu'à un niveau de pression de coupure (p_Kab), sachant que le niveau de la pression d'enclenchement (p_Kzu) du premier élément de commande et le niveau de la pression de coupure (p_Kab) du deuxième élément de commande correspondent, respectivement, à un niveau de pression de sortie du premier ou du deuxième éléments de commande dans le premier niveau de démultiplication (i1) avant le début du rétrogradage.

13. Procédé selon la revendication 12, **caractérisé en ce que** la fonction prédéfinie d'augmentation de la pression et/ou la fonction prédéfinie de réduction de la pression est une fonction rampe.

14. Procédé selon la revendication 12, **caractérisé en ce que** la fonction prédéfinie d'augmentation de la pression et/ou la fonction prédéfinie de réduction de la pression est un saut de pression.

15. Procédé selon la revendication 12, 13 ou 14, **caractérisé en ce que** le niveau de la pression de coupure (p_Kab) du deuxième élément de commande est, au niveau du montant, au moins presque "zéro".

16. Procédé selon la revendication 12, 13 ou 14, **caractérisé en ce que** le niveau de la pression de coupure (p_Kab) du deuxième élément de commande est une pression de pré-remplissage du deuxième élément de commande.

17. Procédé selon une des revendications précédentes, **caractérisé en ce que** en cas de passage de poussée vers tirage ou de tirage vers poussée pendant le rétrogradage, le critère d'interruption n'est validé qu'après écoulement d'un intervalle de temps prédéfini et lancé lors du passage de poussée vers tirage ou de tirage vers poussée.

18. Procédé selon une des revendications précédentes, **caractérisé en ce que** tous les processus de commande (A_RS) associés au rétrogradage du premier niveau de démultiplication (i1) au deuxième niveau de démultiplication (i2), en particulier des temps de verrouillage spécifiques à la commande et un estompage de couple spécifique à la commande, sont convertis simultanément avec la validation du critère d'interruption en des processus de commande correspondants (A_HS) d'un passage montant du deuxième niveau de démultiplication (i2) au premier niveau de démultiplication (i1).
